# EUROPEAN PATENT APPLICATION

(11) **EP 2 028 000 A1**
(43) Date of publication of application: **25.02.2009**
(21) Application number: 08013569.2
(22) Date of filing: 29.07.2008
(51) Int. Cl.: B32B 27/36, C08J 5/18

(54) **Aircraft window**

(30) Priority: 07.08.2007 US 890664
(71) Applicant: Bayer MaterialScience LLC, Pittsburgh, PA 15205 (US)
(72) Inventor: Gorny, Rüdiger, Dr., Moon Township, PA 15108 (US); Moulinie, Pierre R., 51375 Leverkusen (DE)
(74) Representative: Marx, Thiemo Patrick

(57) **Abstract**

An aircraft window comprising a transparent pane meeting the Peak Heat Release Rate and the 2 min Heat Release requirements of OSU100/100 is disclosed. The pane comprise (co)polycarbonate and bromine-substituted oligocarbonate at weight ratio between said oligocarbonate to said (co)polycarbonate in the range of 0.1112 to 1. Excluded from the scope of the (co)polycarbonate resin of the invention is a copolycarbonate that contains more than 37 percent relative to its weight of residues of 1,1-bis-(4-hydroxy-phenyl)-3,3,5-trimethylcyclohexane.

## Description

### Field of the Invention

The invention concerns aircraft windows and in particular windows that meet the flame resistance requirements of The Ohio State University test known as OSU100/100.

### BACKGROUND OF THE INVENTION

The interior of a modern commercial aircraft includes several components that contain polymeric resins. Among these are transparent glazing panes forming the interior portion of the aircraft window (these are also referred to sometimes as "dust covers"). In addition to their optical characteristics (maximum light transmission and minimum haze values) these panes are required to meet stringent demands relative to their flame resistance.

Polycarbonate resin, the traditional material for making such panes does not in and of itself meet the standards imposed by the test method for heat release (known as the OSU 100/100) that sets acceptance criteria for such components. The 100/100 in OSU100/100 refers to the Peak Heat Release Rate (referred to below as PHRR) and the 2 min Heat Release (referred to below as 2MHR). To be an acceptable material, both parameters are required to be at most 100 kW/m². Naturally, the optical characteristics of the window pane include Total Light Transmission value that is at least 60%, preferably at least 70%, more preferably at least 80% and haze value that is at most 10%, preferably at most 5% determined on specimens 2 mm in thickness in accordance with ASTM E-313.

While flame retarded polycarbonate resins meeting the standards of the well known UL-94 are commercially available, these resins fall short of the requirements of the more stringent OSU test. That is to say that resins that rate well under the conditions of the UL-94 test do not necessarily meet the requirements set forth in the OSU PHRR and 2MHR tests. For instance Makrolon 6485 polycarbonate is a product that rates V-0 at 1.5 mm thickness and above and 5 VA at 3 mm thickness and above, yet fails the OSU heat release test at 2 mm thickness as the PHRR and 2MHR values for this resin are, respectively 228kW/m² and 190 kW/m². Also, resins that meet the requirements of OSU 100/100 do not necessarily meet the standards of UL94-V0.

The art is noted to include U.S. Patent 6,872,798 that disclosed a thermoplastically shaped flame proofed polycarbonate composite material that includes two or more layers, at least one layer comprises a Limiting Oxygen Index value (LOI) lower than 29 and at least one layer comprises LOI value higher than 29. Any of a large variety of known flame retardant agents may be used in the context of the disclosed composite.

U.S. Patent Application 2006-0228558 refers to aircraft windows having transparent inner layer made of polycarbonate that meet the FAA heat release criteria of Ohio State University heat release test. The compositional makeup of such layer is not described.

### SUMMARY OF THE INVENTION

An aircraft window comprising a transparent pane meeting the Peak Heat Release Rate and the 2 min Heat Release requirements of OSU100/100 is disclosed. The pane comprises (co)polycarbonate and bromine-substituted oligocarbonate at weight ratios between said oligocarbonate to said (co)polycarbonate in the range of 0.1112 to 1. Excluded from the scope of the (co)polycarbonate resin of the invention is a copolycarbonate that contains more than 37 percent relative to its weight of residues of 1,1-bis-(4-hydroxy-phenyl)-3,3,5-trimethylcyclohexane.

### DETAILED DESCRIPTION OF THE INVENTION

The term polycarbonate as used in the context of the present invention refers to homopolycarbonates, copolycarbonates (including polyestercarbonates) and excluding certain copolycarbonates as described below. Polycarbonates are known and their structure and methods of preparation have been disclosed, for example, in U.S. Patents 3,030,331; 3,169,121; 3,395,119; 3,729,447; 4,255,556; 4,260,731; 4,369,303, 4,714,746 and 6,306,507 all of which are incorporated by reference herein. The polycarbonates generally have a weight average molecular weight of 10,000 to 200,000, preferably 20,000 to 80,000 and their melt flow rate, per ASTM D-1238 at 300°C, is about 1 to about 65 g/10 min., preferably about 2 to 35 g/10 min. They may be prepared, for example, by the known diphasic interface process from a carbonic acid derivative such as phosgene and dihydroxy compounds by polycondensation (see German Offenlegungsschriften 2,063,050; 2,063,052; 1,570,703; 2,211,956; 2,211,957 and 2,248,817; French Patent 1,561,518; and the monograph by H. Schnell, "Chemistry and Physics of Polycarbonates", Interscience Publishers, New York, New York, 1964, all incorporated herein by reference).

In the present context, dihydroxy compounds suitable for the preparation of the polycarbonates of the invention conform to the structural formulae (1) or (2).

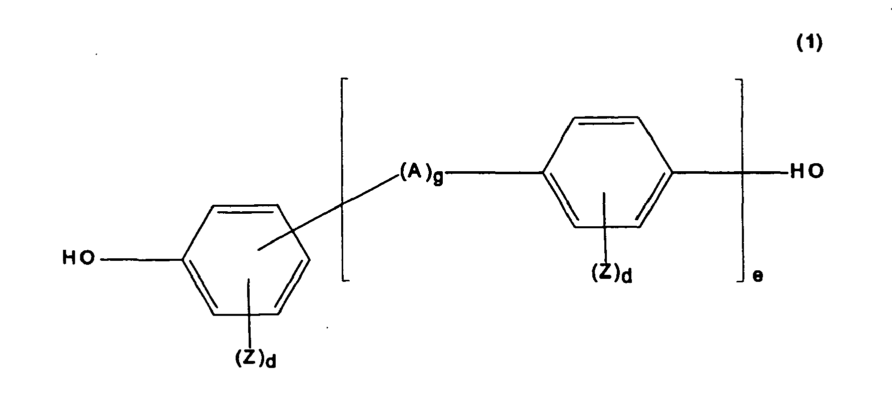

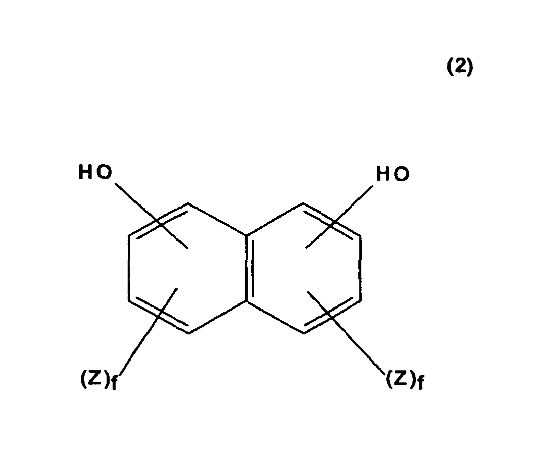

wherein
- A: denotes an alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, a single bond, a carbonyl group, an oxygen atom, a sulfur atom, -SO-or -SO₂ or a radical conforming to 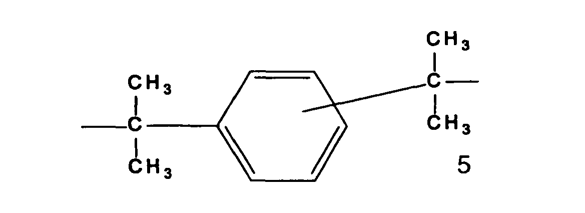
e and g both denote the number 0 to 1;
- Z: denotes F, Cl, Br or C₁-C₄-alkyl and if several Z radicals are substituents in one aryl radical, they may be identical or different from one another;
- d: denotes an integer of from 0 to 4; and
- f: denotes an integer of from 0 to 3.

Among the dihydroxy compounds useful in the practice of the invention are hydroquinone, resorcinol, bis-(hydroxyphenyl)-alkanes, bis-(hydroxyphenyl)-ethers, bis-(hydroxyphenyl)-ketones, bis-(hydroxyphenyl)-sulfoxides, bis-(hydroxyphenyl)-sulfides, bis-(hydroxyphenyl)-sulfones, and α,α-bis-(hydroxyphenyl)-diisopropylbenzenes, as well as their nuclear-alkylated compounds. These and further suitable aromatic dihydroxy compounds are described, for example, in U.S. Patents 5,105,004; 5,126,428; 5,109,076; 5,104,723; 5,086,157; 3,028,356; 2,999,835; 3,148,172; 2,991,273; 3,271,367; and 2,999,846, all incorporated herein by reference.

Further examples of suitable bisphenols are 2,2-bis-(4-hydroxy-phenyl)-propane (bisphenol A), 2,4-bis-(4-hydroxyphenyl)-2-methyl-butane, 1,1-bis-(4-hydroxyphenyl)-cyclohexane, α,α'-bis-(4-hydroxy-phenyl)-p-diisopropylbenzene, 2,2-bis-(3-methyl-4-hydroxyphenyl)-propane, 2,2-bis-(3-chloro-4-hydroxyphenyl)-propane, bis-(3,5-dimethyl-4-hydroxyphenyl)-methane, 2,2-bis-(3,5-dimethyl-4-hydroxyphenyl)-propane, bis-(3,5-dimethyl-4-hydroxyphenyl)-sulfide, bis-(3,5-dimethyl-4-hydroxy-phenyl)-sulfoxide, bis-(3,5-dimethyl-4-hydroxyphenyl)-sulfone, dihydroxybenzophenone, 2,4-bis-(3,5-dimethyl-4-hydroxyphenyl)-cyclohexane, α,α'-bis-(3,5-dimethyl-4-hydroxyphenyl)-p-diisopropyl-benzene, 1,1-bis-(4-hydroxy-phenyl)-3,3,5-trimethylcyclohexane, 4,4'-dihydroxydiphenyl, and 4,4'-sulfonyl diphenol.

Importantly, excluded from the scope of the (co)polycarbonate resin of the invention is a copolycarbonate that contains more than 37, preferably more than 25, most preferably more than 15 percent relative to its weight of residues of 1,1-bis-(4-hydroxy-phenyl)-3,3,5-trimethylcyclohexane (The term "residue" refers to the structure of the relevant dihydroxy compound except for the hydrogen atom of its hydroxyl groups).

Examples of particularly preferred bisphenols are 2,2-bis- (4-hydroxyphenyl)-propane, 2,2-bis-(3,5-dimethyl-4-hydroxyphenyl)-propane; 1,1-bis-(4-hydroxyphenyl)-cyclohexane and 4,4'-dihydroxydiphenyl.

The most preferred bisphenol is 2,2-bis-(4-hydroxyphenyl)-propane (bisphenol A).

The polycarbonates of the invention may entail in their structure units derived from one or more aromatic dihydroxy compounds.

The polycarbonates of the invention may also be branched by condensing therein small quantities, e.g., 0.05 to 2.0 mol % (relative to the bisphenols) of polyhydroxyl compounds as branching agents. Such branching agents suitable in the context of polycarbonate are known and include the agents disclosed in U.S. Patents 4,185,009; 5,367,044; 6,528,612;and 6,613,869 incorporated herein by reference, preferred branching agents include isatin biscresol and 1,1,1-tris-(4-hydroxyphenyl)ethane (THPE).

Polycarbonates of this type have been described, for example, in German Offenlegungsschriften 1,570,533; 2,116,974 and 2,113,374; British Patents 885,442 and 1,079,821 and U.S. Patent 3,544,514. The following are some examples of polyhydroxyl compounds which may be used for this purpose: phloroglucinol; 4,6-dimethyl-2,4,6-tri-(4-hydroxy-phenyl)-heptane; 1,3,5-tri-(4-hydroxyphenyl)-benzene; 1,1,1-tri-(4-hydroxyphenyl)-ethane; tri-(4-hydroxyphenyl)-phenylmethane; 2,2-bis-[4,4-(4,4'-dihydroxydiphenyl)]-cyclohexyl-propane; 2,4-bis-(4-hydroxy-1-isopropylidine)-phenol; 2,6-bis-(2'-dihydroxy-5'-methylbenzyl)-4-methylphenol; 2,4-dihydroxybenzoic acid; 2-(4-hydroxyphenyl)-2-(2,4-dihydroxyphenyl)-propane and 1,4-bis-(4,4'-dihydroxytriphenylmethyl)-benzene. Some of the other polyfunctional compounds are 2,4-dihydroxy-benzoic acid, trimesic acid, cyanuric chloride and 3,3-bis-(4-hydroxyphenyl)-2-oxo-2,3-dihydroindole.

In addition to the polycondensation process mentioned above, other processes for the preparation of the polycarbonates of the invention are polycondensation in a homogeneous phase and transesterification. The suitable processes are disclosed in U.S. Patents 3,028,365; 2,999,846; 3,153,008; and 2,991,273 all incorporated herein by reference.

The preferred process for the preparation of polycarbonates is the interfacial polycondensation process. Other methods of synthesis in forming the polycarbonates of the invention, such as disclosed in U.S. Patent 3,912,688, incorporated herein by reference, may be used. Suitable polycarbonate resins are available in commerce, for instance, under the Makrolon trademark from Bayer MaterialScience LLC of Pittsburgh, Pennsylvania.

The flame retardant suitable in the context of the invention is bromine substituted oligocarbonate. Especially suitable is an oligocarbonate the molecular structure of which contains at least some units conforming to 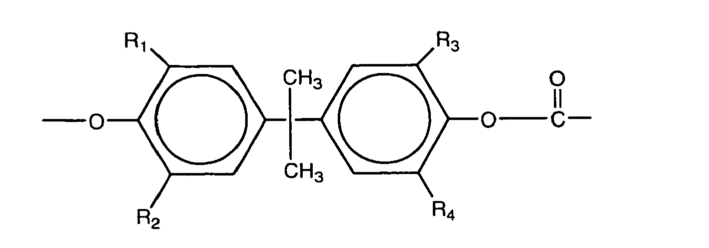 where R₁, R₂, R₃ and R₄ independently one of the others denote H, Br or CH₃ with the proviso that at least one of R₁, R₂, R₃, R₄ denotes Br. The preferred oligocarbonate includes as end groups at least one member selected from the group consisting of phenyl, p-tert-butylphenyl, cumyl, nonyl phenyl and iso-nonyl phenyl radicals.

Most suitable is the oligocarbonate having bromine content greater than 40 percent, preferably 50 to 55 percent relative to its weight and conforming to

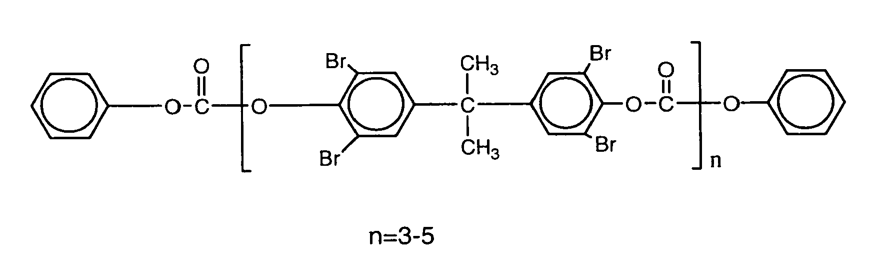

The amount by weight of the included bromine-substituted oligocarbonate relates to the weight of the (co)polycarbonate in the range of 0.1112 to 1, preferably 0.176-0.667, more preferably 0.250-0.538, most preferred 0.351 to 0.493.

The inventive composition may further contain one or more conventional functional additives such as antistatic agents, antioxidants, additional flame retardant agents, lubricants, mold release agents, colorants, optical brighteners and UV stabilizers. Suitable UV absorbers include hydroxybenzophenones, hydroxybenzotriazoles, hydroxybenzotriazines, cyanoacrylates, oxanilides, and benzoxazinones. Suitable stabilizers include carbodiimides, such as bis-(2,6-diisopropylphenyl) carbodiimide and polycarbodiimides; hindered amine light stabilizers; hindered phenols (such as Irganox 1076 (CAS number 2082-79-3), Irganox 1010 (CAS number 6683-19-8); phosphites (such as Irgafos 168, CAS number 31570-04-4; Sandostab P-EPQ, CAS number 119345-01-6; Ultranox 626, CAS number 26741-53-7; Ultranox 641, CAS number 161717-32-4; Doverphos S-9228, CAS number 154862-43-8), triphenyl phosphine, and phosphorous acid. Suitable hydrolytic stabilizers include epoxides such as Joncryl ADR-4368-F, Joncryl ADR-4368-S, Joncryl ADR-4368-L, cycloaliphatic epoxy resin ERL-4221 (CAS number 2386-87-0). Suitable additional flame retardants include phosphorus compounds such as tributyl phosphate, triphenyl phosphate, tricresyl phosphate, diphenylcresyl phosphate, diphenyloctyl phosphate, diphenyl-2-ethylcresyl phosphate, tri-(isopropylphenyl) phosphate, methylphosphonic acid dimethyl esters, methylphosphonic acid diphenyl esters, phenylphosphonic acid diethyl esters, triphenylphosphine oxide, tricresylphosphine oxide and halogenated compounds.

Such stabilizer additives are known in the art and are disclosed in standard reference works such as "Plastics Additives Handbook", 5^{th} edition, edited by H. Zweifel, Hanser Publishers incorporated herein by reference. The additives may be used in effective amounts, preferably of from 0.01 to a total of about 30% relative to the total weight of the polycarbonate.

The inventive molding composition is suitable for making transparent panes for aircraft windows ("dust covers") by any of the thermoplastic processes, including injection molding and extrusion.

The standard test method for heat release is the Ohio State University heat release test as found in FAR 25.853, Appendix F, Part IV. The 100/100 in OSU100/100 refers to the Peak Heat Release Rate (referred to below as PHRR) and the 2 min Heat Release (referred to below as 2MHR). To be acceptable, both parameters of the examined material need to be at most 100kW/m2.

### EXPERIMENTAL

The compositions described below were prepared conventionally and tested.

The materials used in preparing the compositions were:
PC-A: Makrolon 1239 branched homopolycarbonate based on bisphenol A, weight average molecular weight 33000 to 36500, melt flow index of 3.5 g/10min, a product of Bayer MaterialScience LLC. ( The indicated values of melt flow index are determined at 300°C, 1.2 kg according to ASTM D-1238).
PC-B: Makrolon 2808 a linear homopolycarbonate based on bisphenol A, weight average molecular weight 27500-29500, melt flow index of 10g/10min, a product of Bayer MateriaiScience LLC.
PC-C: Makrolon 3208 a linear homopolycarbonate based on bisphenol A, weight average molecular weight 32000-34000, melt flow index of 4.5g/10 min, a product of Bayer MaterialScience LLC.
BOC: tetra-brominated oligocarbonate based on bisphenol A conforming to 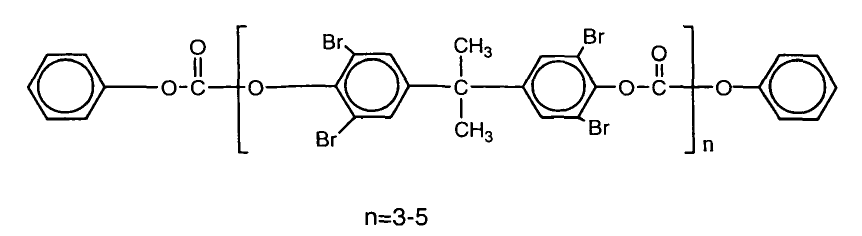 a product of Chemtura Corporation.

The materials listed below, used in the several compositions as noted below are known for their utility in the context of thermoplastic polycarbonate molding compositions. None, alone or in combination with others are believed to be critical in the context of the invention. Salt: alkali metal sulphonate salt. UVA: conventional UV absorber. PBT: polybutylene terephthalate. MRA: mold release agent. THS: thermal stabilizer.

The comparative examples each contained PC and a flame retardant that is outside the scope if the invention. The term PFR refers to a phosphate flame retarding agent conforming to 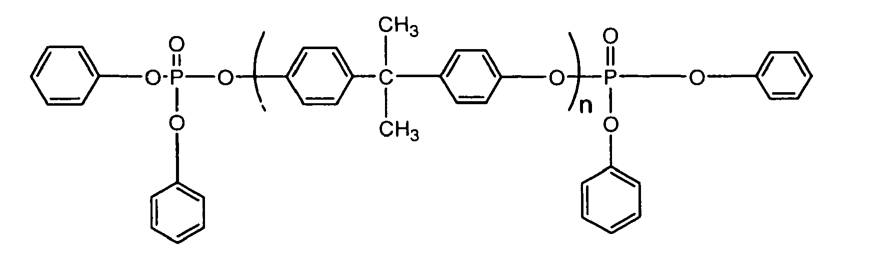 wherein n is 1-5 and BFR refers to a bromine-substituted phosphate (tris(3-bromo-2,2(bromoethyl)propyl) phosphate) conforming to

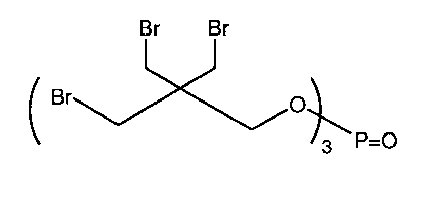

The polycarbonate (PC) of examples 1, 2 and 5 shown in Table 1 was PC-A. The polycarbonate resins of Examples 3 and 4 were, respectively PC-C and PC-B.

**Table 1**

| Example | Composition | PHRR | 2MHR | BOC/PC wt. ratio |
|---|---|---|---|---|
| 1 | PC-A+20% BOC | 80 | 44.8 | 0.25 |
| 2 | PC-A+30% BOC | 62 | 27.9 | 0.429 |
| 3 | PC-C+30% BOC | 83.0 | 46.3 | 0.429 |
| 4 | PC-B+30% BOC | 72.0 | 35.7 | 0.429 |
| 5 | PC-A+10% BOC | 86.9 | 111.4 | 0.1111 |

The compositions of Examples 1, 2, 3 and 4 of Table 1 are representative of the invention. Example 5 wherein the weight ratio of oligocarbonate to (co)polycarbonate is outside the inventive scope fails to meet the flammability requirement relative to 2 MHR and is therefore unsuitable for making the inventive window.

The compositions of examples 6-12 shown in Table 2 contained branched PC and BOC in the tabulated weight ratio therebetween. These compositions further contained the indicated and the conventional additives noted above.

**Table 2**

| Example | 6 | 7 | 8 | 9 | 10 | 11 | 12 |
|---|---|---|---|---|---|---|---|
| Salt | 0.27 | - | - | - | - | - | - |
| UVA | - | 0.25 | 1.0 | - | - | - | - |
| MRA | - | 0.23 | - | - | - | - | - |
| PFR | - | 0.1 | - | - | - | - | - |
| PBT | - | - | - | 20.0 | 2.0 | - | - |
| BFR | - | - | - | - | - | 5.0 | 5.0 |
| PHRR | 91 | 97 | 83.5 | 86 | 68 | 97 | 61 |
| 2MHR | 67.5 | 22.7 | 46.5 | 69.5 | 40.1 | 39 | 34.8 |
| BOC/PC wt.ratio | 0.1114 | 0.1118 | 0.435 | 0.143 | 0.441 | 0.118 | 0.269 |

Compositions 13-15 (Table 3) that are outside the scope of the invention included the branched polycarbonate and the indicated amounts of a phosphate flame retardant (Examples 13 and 14) or a bromine-substituted phosphate flame retardant outside the scope of the invention (Example 15). These compositions fall short of the requirements under OSU 100/100 and are therefore unsuitable for the making the inventive window.

**Table 3**

| Example | 13 | 14 | 15 |
|---|---|---|---|
| PFR | 10 | 15 | 10 |
| BFR | - | - | 5 |
| PHRR | 105 | 110 | 107 |
| 2MHR | 66 | 59.8 | 52.2 |
| BOC/PC wt.ratio | 0 | 0 | 0 |

The compositions exemplified in Table 4 as 16-18 are based on branched polycarbonate and contain the bromine-substituted oligocarbonate of the invention (BOC) in amounts indicated by the respective ratios. These compositions meet the stringent requirements of OSU100/100 are therefore suitable for making the inventive window.

**Table 4**

| Example | 16 | 17 | 18 |
|---|---|---|---|
| Salt | 0.07 | 0.07 | 0.07 |
| PFR | 10.0 | 10.0 | - |
| BFR | - | - | 10.0 |
| PHRR | 77 | 66 | 88 |
| 2MHR BOC/PC wt.ratio | 36.1 | 34 | 68.7 |
| | 0.125 | 0.286 | 0.500 |

The compositions exemplified in Table 5 as 19-21 contain a copolycarbonate of bisphenol A and 1,1-bis-(4-hydroxy-phenyl)-3,3,5-trimethylcyclohexane (the amount of 1,1-bis-(4-hydroxy-phenyl)-3,3,5-trimethylcyclohexane in the copolycarbonate is 42 percent relative to the weight of the copolycarbonate) and the bromine-substituted oligocarbonate (BOC) in amounts indicated by the respective ratios. These compositions fail to meet the requirements of OSU100/100 and are therefore unsuitable for making the inventive window.

**Table 5**

| Example | 19 | 20 | 21 |
|---|---|---|---|
| PHRR | 159 | 112 | 112 |
| 2MHR | 115.6 | 98.2 | 94.4 |
| BOC/PC wt.ratio | 0.111 | 0.250 | 0.429 |

The compositions shown in Table 6 as (examples 24-26) contained a copolycarbonate of bisphenol A and 30 mole percent of 4,4'-dihydroxydiphenyl (the percent based on the total molar amount of the aromatic dihydroxy compounds) and the bromine-substituted oligocarbonate (BOC) in amounts indicated by the respective ratios. In Examples 22 and 23 these ratios are outside the scope of the protection and the compositions that fail to meet the requirements of OSU100/100 characterize the materials as unsuitable for making the inventive window. Example 24 represents an acceptable material in accordance with the invention.

**Table 6**

| Example | 22 | 23 | 24 |
|---|---|---|---|
| UVA | - | 0.1 | 0.1 |
| THS | - | 0.05 | 0.05 |
| PHRR | 103 | 108 | 86 |
| 2MHR | 47.5 | 9 | 43 |
| BOC/PC wt. ratio | 0.111 | 0.083 | 0.145 |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. An aircraft window comprising a transparent pane meeting the Peak Heat Release Rate and the 2min Heat Release requirements of OSU 100/100 comprising (co)polycarbonate and bromine-substituted oligocarbonate, wherein the weight ratio of said oligocarbonate to said (co)polycarbonate is in the range of 0.1112 to 1, said (co)polycarbonate including in its molecular structure no more than 37 percent relative to its weight of residues of 1,1-bis-(4-hydroxy-phenyl)-3,3,5-trimethylcyclohexane.

2. The window of Claim 1 wherein said ratio is 0.176-0.667.

3. The window of Claim 1 wherein said ratio is 0.250-0.538.

4. The window of Claim 1 wherein said ratio is 0.351 to 0.493.

5. The window of Claim 1 wherein the oligocarbonate conforms structurally to 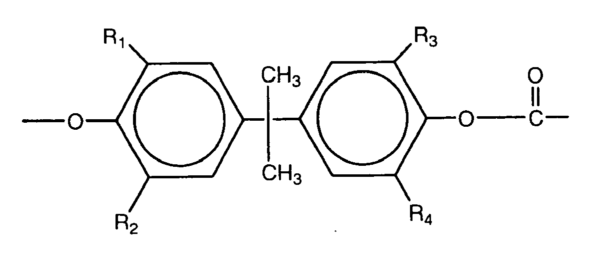 wherein R₁ ,R₂ ,R₃ and R₄, independently one of the others denote H, Br, or CH₃ with the proviso that at least one of R₁, R₂, R₃, R₄ is Br.

6. The window of Claim 5 wherein said oligocarbonate includes end groups selected from the group consisting of phenyl, p-tert-butylphenyl, cumyl, nonyl phenyl and iso-nonyl phenyl radicals.

7. The window of Claim 2 wherein the oligocarbonate conforms structurally to

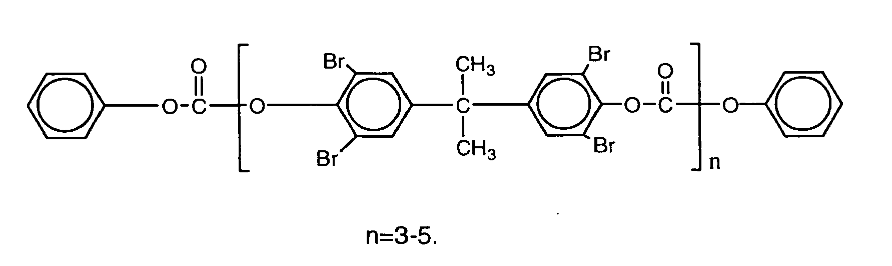

8. The window of Claim 1 wherein the pane is an extruded product.

9. The window of Claim 1 wherein the pane is an injection molding product.

10. The window of Claim 1 wherein said (co)polycarbonate includes in its molecular structure no more than 37 percent relative to its weight of residues of 1,1-bis-(4-hydroxy-phenyl)-3,3,5-trimethylcyclohexane.
